# EUROPEAN PATENT SPECIFICATION

(11) **EP 2 139 932 B1**
(45) Date of publication and mention of the grant of the patent: **07.11.2012**
(21) Application number: 08777502.9
(22) Date of filing: 17.06.2008
(51) Int. Cl.: C08F 292/00, C08F 2/22, C08F 2/44, C08L 51/10

(54) **COMPOSITE PARTICLE AND PRODUCTION METHOD THEREOF**
VERBUNDPARTIKEL UND HERSTELLUNGSVERFAHREN DAFÜR
PARTICULE COMPOSITE ET PROCÉDÉ DE PRODUCTION DE CELLE-CI

(30) Priority: 28.06.2007 JP 2007170232
(43) Date of publication of application: 06.01.2010
(73) Proprietor: Canon Kabushiki Kaisha, Tokyo 146-8501 (JP)
(72) Inventor: NAKAHAMA, Kazumichi, Tokyo 146-8501 (JP)
(74) Representative: Weser, Thilo
(86) International application number: PCT/JP2008/061383
(87) International publication number: WO 2009/001789

(56) References cited:
- WO-A1-00/35577
- WO-A1-2004/013188
- JP-A- 2003 252 917
- JP-A- 2004 099 844
- JP-A- 2006 070 064
- JP-A- 2006 328 309
- US-A1- 2006 222 594

## Description

### TECHNICAL FIELD

The present invention relates to composite particles applicable in a wide range of industrial fields including electronic materials, optical materials and medical materials, and to a production method of the composite particles.

### BACKGROUND ART

In recent years, the research and development relating to composite particles has been actively conducted with the aim of application for various industrial fields. For example, magnetic particles containing a polymer compound and a magnetic material are expected to have wide variety of applications, and attention has especially focused on the use as a base in the medical and diagnosis fields such as pharmaceuticals and diagnostic medicines.

As a production method for magnetic particles that are composite particles each containing a polymer compound and a magnetic material (hereinafter, simply referred to as "magnetic particle"), there have been proposed methods using soap-free emulsion polymerization and miniemulsion polymerization.

Japanese Patent Application Laid-Open No. 2004-099844 discloses a method of producing magnetic particles including the steps of dispersing fine particles of magnetite having a nanometer size in an oily monomer and performing miniemulsion polymerization. However, in this method, the amount of magnetite charged is restricted and it is difficult to substantially prevent separation of the magnetite particles in a polymerization process. Therefore, there are some concerns that the content of the magnetite in each magnetic particle decreases.

Japanese Patent Application Laid-Open No. 2006-131771 discloses that magnetic particles having a narrow particle size distribution can be produced in soap-free emulsion polymerization by using magnetite fine particles having a nanometer size as seed particles. However, in this method, it is difficult to prevent seed particles from coalescing with each other in a polymerization process, and therefore the magnetic particles become uneven in the magnetite content from particle to particle, so that the magnetization tends to be nonuniform. In addition, there is a possibility that coalesced seed particles act as a ferromagnetic material, and therefore there are concerns that dispersibility of magnetic particles is impaired by the effect of remaining magnetization.

Magnetic particles obtained by the production methods disclosed in the known documents described above are still insufficient from the viewpoints of the content of magnetic material, magnetization uniformity, particle size distribution and dispersibility, and thus are not always of high practical use under the present circumstances. For this reason, composite particles each of which containing solid particles represented by magnetic material particles in a uniform state at a high ratio and having excellent size uniformity and dispersibility have been demanded.

### DISCLOSURE OF THE INVENTION

A method of producing composite particles provided by the present invention is a method of producing composite particles each comprising a polymer compound and solid particles, characterized by comprising the steps: (1) mixing a first liquid containing a monomer and an organic solvent with solid particles to obtain a mixed solution; (2) mixing the mixed solution with a second liquid to form an emulsion; (3) fractionating the first liquid from a dispersoid of the emulsion; and (4) polymerizing the monomer remaining in the dispersoid after the fractionation.

Composite particles provided by the present invention are composite particles each comprising a polymer compound and solid particles, characterized in that the composite particles have a polydispersity index (Dw/Dn) calculated from a number average particle size (Dn) and a weight average particle size (Dw), of not more than 1.3 and a ratio (Df/Dd) of an average hydrodynamic particle size (Df) in water and an average dry particle size (Dd), of not more than 1.3; and the content of the solid particles occupied in each of the composite particles is not less than 50 wt% and not more than 80 wt%, and not less than 80% of the solid particles are particles having a particle size of not more than 20 nm.

Further features and aspects of the present invention will become apparent from the following detailed description of exemplary embodiments with reference to the attached drawings.

### BRIEF DESCRIPTION OF THE DRAWINGS

FIG. 1 is a schematic diagram schematically illustrating a composite particle formation mechanism based on the present invention.
FIG. 2 is a transmission electron micrograph of a composite particle obtained in the present invention.
FIG. 3 is a schematic diagram schematically illustrating a composite particle formation mechanism based on miniemulsion polymerization.

### BEST MODES FOR CARRYING OUT THE INVENTION

The present invention will be specifically described below.

A method of producing composite particles of the present invention is a method of producing composite particles each comprising a polymer compound and solid particles, and comprises the following steps.

That is, (1) mixing a first liquid containing a monomer and an organic solvent with solid particles to obtain a mixed solution;
(2) mixing the mixed solution with a second liquid to form an emulsion;
(3) fractionating the first liquid from a dispersoid of the emulsion; and
(4) polymerizing the monomer remaining in the dispersoid after the fractionation.

In the present invention, the first liquid includes at least one monomer and at least one organic solvent.

The monomer in the present invention can be used without any limitation as long as it is a polymerizable compound.

Specific examples of a monomer used in radical polymerization include the following.

That is, polymerizable unsaturated aromatics such as styrene, chlorostyrene, α-methyl styrene, divinylbenzene and vinyl toluene;
polymerizable unsaturated carboxylic acids such as (meth)acrylic acid, itaconic acid, maleic acid and fumaric acid, or salts thereof;
polymerizable unsaturated sulfonic acids such as styrene sulfonic acid sodium salt, or salts thereof;
polymerizable carboxylic acid esters such as methyl (meth)acrylate, ethyl (meth)acrylate, n-butyl (meth)acrylate, 2-hydroxyethyl (meth)acrylate, glycidyl (meth)acrylate, ethylene glycol di-(meth)acrylate and tribromophenyl (meth)acrylate;
unsaturated carboxylic acid amides, polymerizable unsaturated nitriles, vinyl halides or conjugated dienes such as (meth)acrylonitrile, (meth)acrolein, (meth)acrylamide, methylene bis(meth)acrylamide, butadiene, isoprene, vinyl acetate, vinyl pyridine, N-vinylpyrrolidone, vinyl chloride, vinylidene chloride and vinyl bromide; and
macromonomers having a polymerizable functional group such as a vinyl group, a methacryloyl group or a dihydroxyl group in a high molecular weight segment such as polystyrene, polyethylene glycol or polymethyl methacrylate.

Further, a monomer used for addition polymerization can also be used in the present invention.

Specific examples of the monomer used for addition polymerization include the following.

That is, aliphatic or aromatic isocyanates such as diphenylmethane diisocyanate, naphthalene diisocyanate, tolylene diisocyanate, tetramethylxylene diisocyanate, xylene diisocyanate, dicyclohexane diisocyanate, dicyclohexylmethane diisocyanate, hexamethylene diisocyanate and isophorone diisocyanate; ketenes; epoxy group-containing compounds; or vinyl group-containing compounds.

Further, a monomer which is reacted with the above-mentioned compound groups includes a compound having a functional group having activated hydrogen, for example, a hydroxyl group or an amino group.

Specific examples of the compound include polyols such as ethylene glycol, diethylene glycol, propylene glycol, 1,4-butanediol, 1,6-hexanediol, glycerine, trimethylolpropane, pentaerythritol, sorbitol, methylene glycoside, sucrose and bis(hydroxyethyl)benzene;
polyamines such as ethylenediamine, hexamethylenediamine, N,N'-diisopropylmethylenediamine, and N,N'-di-sec-butyl-p-phenylenediamine, 1,3,5-triaminobenzene; and oximes.

In the present invention, the monomers may be used alone, or two or more of them may be mixed for use. Moreover, a polyfunctional compound capable of acting as a crosslinking agent other than the monomer may be coexisted.

Examples of the polyfunctional compound include the following.

That is, N-methylol acrylamide, N-ethanol acrylamide, N-propanol acrylamide, N-methylol maleimide, N-ethylol maleimide, N-methylol maleinamic acid, N-methylol maleinamic acid ester, N-alkylolamide of a vinyl aromatic acid (for example, N-methylol-p-vinyl benzamide), and N-(isobutoxymethyl)acrylamide.

Further, among the above-mentioned monomers, polyfunctional monomers such as divinylbenzene, divinylnaphthalene, divinylcyclohexane, 1,3-dipropenylbenzene, ethylene glycol di-(meth)acrylate, diethylene glycol di-(meth)acrylate, diethylene glycol di-(meth)acrylate, butylene glycol, trimethylol ethane tri(meth)acrylate, and pentaerythritol tetra(meth)acrylate can also be used as a crosslinking agent.

In this case, the polyfunctional compounds may be used alone or two or more of them may be mixed for use.

As the organic solvent in the present invention, any solvent is applicable as long as it has low solubility in water and is compatible with the monomer. Preferably, the organic solvent is a volatile organic solvent, in particular, an organic solvent having a boiling point lower than that of the monomer.

Examples of such an organic solvent include the following.

That is, hydrocarbon halides (dichloromethane, chloroform, chloroethane, dichloroethane, trichloroethane, carbon tetrachloride etc.); ketones (for example, acetone, methyl ethyl ketone, and methyl isobutyl ketone); ethers (tetrahydrofuran, ethyl ether, isobutyl ether etc.); esters (ethyl acetate, butyl acetate etc.); and aromatic hydrocarbons (benzene, toluene, xylene etc.).

These organic solvents may be used alone, or two or more of them can be mixed at an appropriate ratio for use.

The second liquid in the present invention is water or an aqueous solution.

In the present invention, a surfactant can be allowed to coexist as a dispersant in one or both of a first liquid and a second liquid for the purpose of stabilizing an emulsion.

The surfactant is not particularly restricted as long as it can be used for conventional latex polymerization.

Examples of an anionic surfactant include the following.

That is, dodecylbenzenesulfonate, decylbenzenesulfonate, undecylbenzenesulfonate, tridecylbenzenesulfonate, and nonylbenzenesulfonate, and sodium, potassium and ammonium salts thereof.

Examples of a cationic surfactant include cetyltrimethylammonium bromide, hexadecylpyridinium chloride, and hexadecyltrimethylammonium chloride.

Further, examples of a nonionic surfactant include various commercially available surfactants in besides polyvinyl alcohol.

Among the above-mentioned surfactants, an anionic surfactant is preferable.

Further, a reactive surfactant (any one of anionic, cationic and nonionic surfactants is acceptable) capable of being polymerized with the above-mentioned oil-soluble monomers can be used.

Preferable examples of a reactive group in the reactive surfactant include one having an ethylenic unsaturated group such as a vinyl group, an allyl group or a (meth)acryloyl group.

The reactive surfactant may be any one having normal surfactant capability as long as it has the above-mentioned reactive group. Examples of the reactive surfactant include those described in Japanese Patent Application Laid-Open No. H09-279073.

Specific examples of the reactive surfactant are:
anionic surfactants, including alkyl benzene sulfonates such as lauryl(allylbenzene)sulfonate, laurylstyrene sulfonate, stearyl(allylbenzene)-sulfonate and stearylstyrene sulfonate, and polyethylene oxide adducts thereof; alkyl sulfosuccinate esters such as laurylallyl sulfosuccinate ester, laurylvinyl sulfosuccinate ester, stearylallyl sulfosuccinate ester and stearylvinyl sulfosuccinate ester, and polyethylene oxide adducts thereof; alkyl or alkenyl sulfonates such as lauryl (meth)acrylate sulfonate and oleyl sulfonate; alkyl or alkenyl sulfates such as stearyl (meth)acrylate sulfate and oleyl sulfate, and polyethylene oxide adducts thereof; and the like;
cationic surfactants, including quaternary ammonium salts such as lauryl triallyl ammonium chloride, stearyl triallyl ammonium chloride, distearyl diallyl ammonium chloride and the like; and
nonionic surfactants, including polyethylene glycol alkyls or alkenyl phenyl ethers such as polyethylene glycol octyl(allyl phenyl)ether, polyethylene glycol nonyl(allyl phenyl)ether, polyethylene glycol oleyl phenyl ether; glycerine fatty acid esters such as monoallyl glyceryl monostearate and monoallyl glyceryl distearate, and polyethylene oxide adducts thereof; sorbitan fatty acid esters such as monoallyl sorbitan monostearate and monoallyl sorbitan tristearate, and polyethylene oxide adducts thereof; and polyethylene oxide esters of (meth)acrylic acid such as polyethylene glycol mono(meth)acrylate and polyethylene glycol di(meth)acrylate; and the like.

The above-mentioned surfactants may be used alone, or two or more of them may be mixed for use.

The amount of a surfactant used may be not less than 0.01 parts by weight, preferably not less than 0.1 parts by weight, particularly preferably not less than 0.5 parts by weight based on 100 parts by weight of the monomer. Usually, the surfactant may be used in a range of not more than 50 parts by weight, preferably in a range of not more than 30 parts by weight.

In the present invention, hydrophobe (cosurfactant) soluble in a first liquid and having a solubility in water of not more than 0.01 g/L may be allowed to coexist with a first liquid for the purpose of stabilizing an emulsion.

Specific examples of the hydrophobe used in the present invention include the following.
(a) Linear, branched and cyclic C8 to C30 alkanes such as hexadecane, squalane and cyclooctane;
(b) C8 to C30 alkyl acrylates such as stearyl methacrylate and dodecyl methacrylate;
(c) C8 to C30 alkyl alcohols such as cetyl alcohol;
(d) C8 to C30 alkyl thiols such as dodecyl mercaptan;
(e) polymers such as polyurethanes, polyesters and polystyrenes; and
(f) long-chain aliphatic or aromatic carboxylic acids, long-chain aliphatic or aromatic carboxylic acid esters, long-chain aliphatic or aromatic amines, ketones, alkane halides, silanes, siloxanes and isocyanates.

Further, long-chain oil-soluble initiators such as lauroyl peroxide can also be used.

Among them, an alkane having not less than 12 carbon atoms is preferably used and an alkane having 12 to 20 carbon atoms is more preferably used.

The solid particle in the present invention is a term used corresponding to a gas particle or a liquid particle, and is a concept including a crystalline solid particle, a non-crystalline amorphous (vitreous) solid particle and a solid particle having a crystalline portion and an amorphous portion.

The solid particle referred in the present invention is a concept including an inorganic material particle, a metal material particle, an oxide material particle, a semiconductor material particle and the like. The solid particle can be appropriately selected from them depending on the composite particle to be obtained.

In the present invention, the size of the solid particle is not always restricted, but since the composite particle is obtained after forming an emulsion state, and therefore the solid particle can be an ultra-fine particle having a submicron size (not more than 1 micron, i.e. not more than 1,000 nm).

Particularly, when the production method of the present invention is used as a method for producing magnetic particles, a magnetic material can be used as fine solid particles. More preferably, fine paramagnetic material particles are used as fine solid particles.

The fine paramagnetic material particles can be optionally selected depending on the purpose and is preferably fine particles of a magnetic material in which the magnetization (remaining magnetization) when a strong magnetic field of 5,000 Oe (oersted) is applied to the fine paramagnetic material particles and then the magnetic field is retuned to a zero magnetic field is not more than 1/3 of magnetization (saturated magnetization) when a magnetic field of 5,000 Oe is applied thereto.

Examples of the magnetic material include various ferrites such as tri-iron tetroxide (Fe₃O₄) and γ-heavy iron sesquioxide (γ-Fe₂O₃); and metals such as iron, manganese and cobalt, or alloys thereof.

Since there is a tendency that composite particles having a stronger magnetic force are demanded in applications such as diagnostic use or the like, a magnetic material which is classified into a ferromagnetic material in a bulk is preferable among the above magnetic materials. From such a viewpoint, ferrites are more preferable, and Fe₃O₄ (magnetite) is particularly preferable. It is to be noted that the kind of a magnetic material is not restricted within a scope where the object of the present invention can be achieved.

The particle size of fine paramagnetic material particles used is smaller than that of the objective composite particles. In this case, in order to prevent a magnetic material from being exposed to the surface of the composite particles, a magnetic material having a particle size of preferably not more than 50 nm, more preferably not more than 30 nm, particularly preferably not more than 20 nm is used. In addition, when magnetite is used as fine paramagnetic material particles, the particle size is preferably not more than 30 nm, and more preferably not more than 20 nm. This is because the affect of remaining magnetization may be increased to thereby impair the dispersibility of composite particles when the particle size of magnetite is larger than 30 nm.

On the other hand, as the magnetic material particles are smaller, it is more difficult to stably magnetic material particles in a dispersoid of an emulsion, and therefore magnetic material particles having a particle size of preferably not less than 3 nm, more preferably not less than 5 nm, particularly not less than 6 nm are used.

Moreover, as the magnetic material, a magnetic material subjected to surface treatment by various coupling agents as represented by a silane coupling agent or by known surface treatment agents such as a higher fatty acid may be used. Specific examples of the surface treatment include hydrophobic treatment and hydrophilic treatment.

The emulsion in the present invention includes an emulsion having any physical property within a scope where the object of the present invention can be achieved, but a preferred emulsion has a particle size distribution of 1 peak and an average particle size in a range of 50 nm to 1,000 nm. More preferably, a monodispersed emulsion having an average particle size of 100 nm to 500 nm and a dispersibility index of not more than 1.5 can be used.

Such an emulsion can be prepared by a conventionally known emulsification method.

The conventionally known emulsification method includes, for example, an intermittent shaking method, a stirring method using a mixer such as a propeller-type stirrer or a turbine-type stirrer, a colloid mill method, a homogenizer method and an ultrasonic irradiation method. These methods can be used alone or a plurality of them can be used in combination. In addition, the emulsion of the present invention may be prepared at one-stage emulsification or multistage emulsification.

The fractionation in the present invention means an operation by which an objective component is preferentially extracted from a dispersoid of an emulsion. For example, when the dispersoid includes a functional material, a monomer and an organic solvent, the organic solvent can be preferentially extracted, or the organic solvent and the monomer can be preferentially extracted, by selecting fractionation conditions. It is to be noted that in the fractionation in the present invention, the degree of extraction of the monomer or organic solvent may be appropriately changed within a scope where the object of the present invention can be achieved.

The fractionation can be performed by any conventionally known method, and fractionation under reduced pressure, molecular fractionation, ultrasonic fractionation and the like can be adopted. Generally, it is preferable to involve an operation under reduced pressure using a pressure reducing apparatus such as an evaporator. This is because the degree of fractionation can be easily controlled by conditions for reducing pressure. When a monomer or an organic solvent to be fractionated has a low boiling point, it can also be fractionated only by being allowed to stand for a long period of time or heating. However, at that time, it is necessary to take sufficient measures for preventing sedimentation or coalescence of an emulsion, and separation of a functional material from an emulsion.

Examples of a polymerization initiator usable in the present invention include the following.

That is, azo(azobisnitrile)-type initiators such as 2,2'-azobisisobutyronitrile, 2,2'-azobis-(2-methylpropanenitrile), 2,2'-azobis-(2,4-dimethylpentanenitrile), 2,2'-azobis-(2-methylbutanenitrile), 1,1'-azobis-(cyclohexanecarbonitrile), 2,2'-azobis-(2,4-dimethyl-4-methoxyvaleronitrile), 2,2'-azobis-(2,4-dimethylvaleronitrile) and 3,2'-azobis-(2-amidinopropane)hydrochloride; and peroxide-type initiators such as benzoyl peroxide, cumenehydroperoxide, hydrogen peroxide, acetyl peroxide, lauroyl peroxide, persulfates (for example, ammonium persulfate), peracid esters (for example, t-butyl peroctate, α-cumylperoxypivalate and t-butyl peroctate).

In addition, examples of the initiator include ascorbic acid/iron (II) sulfate/sodium peroxydisulfate, tertiary-butyl hydroperoxide/sodium disulfite, and tertiary-butyl hydroperoxide/sodium hydroxymethane sulfinic acid.

Moreover, a redox-type initiator such as a mixture, for example, a mixture of a sodium salt of hydroxymethane sulfinic acid and sodium disulfite can also be used as each component, for example, a reducing component.

Furthermore, the polymerization initiators may be used alone or a plurality of them can be used in combination.

The amount of a polymerization initiator used is usually selected from a range of 0.1 to 30 wt% based on a monomer, and these polymerization initiators may be added to a first liquid or a second liquid before or after emulsification.

When added after emulsification, a polymerization initiator may be added at any timing before or after fractionation.

Next, the formation mechanism for the composite particles in the present invention will be described while is compared with a general method using miniemulsion polymerization.

It is already described that it is difficult to obtain composite particles having a high content of solid particles by the conventional method using miniemulsion polymerization. This is due to the fact that there is an upper limit to the amount of solid particles retainable per monomer unit in terms of the principle of the production method, and that separation of solid particles cannot be substantially prevented in a polymerization process.

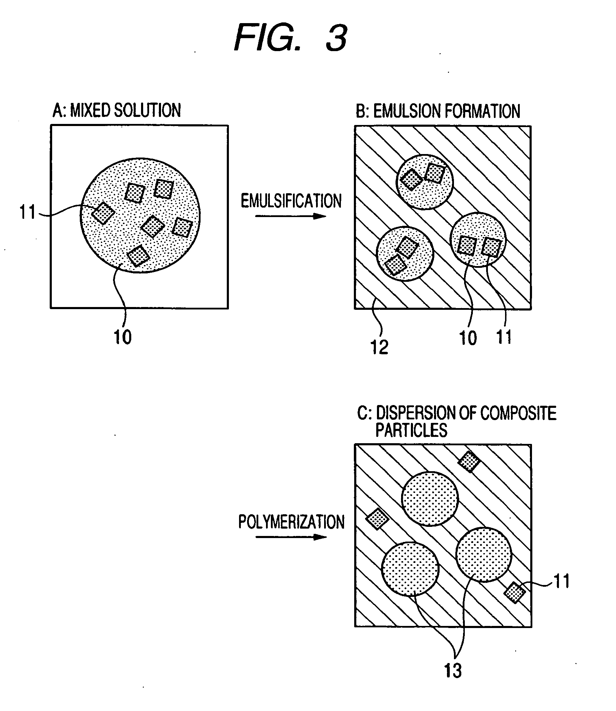

As a mechanism of composite particle formation in miniemulsion polymerization, the mechanism illustrated in FIG. 3 can be considered.

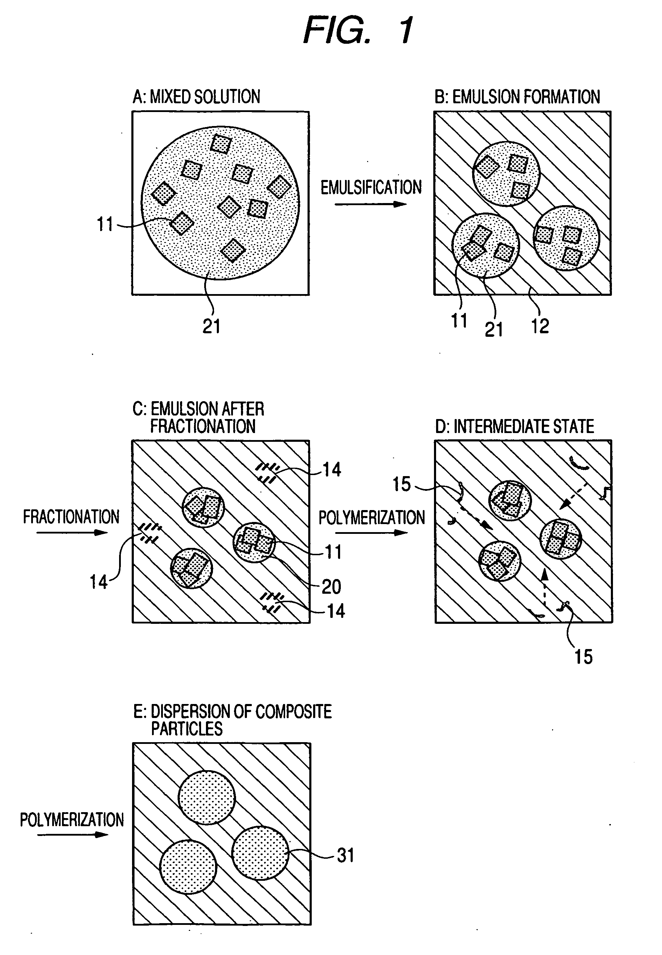

FIG. 3, A illustrates a mixed solution of solid particles 11 and a monomer 10. In FIG. 1, B, the mixed solution A is mixed with water 12 for emulsification, and thereby an O/W type emulsion is formed. In FIG. 3, C, a monomer of a dispersoid in the emulsion B is polymerized to thereby obtain a dispersion in which composite particles 13 each containing a polymer compound and solid particles are dispersed in water 12. Incidentally, a surfactant and a hydrophobe are omitted in FIG. 3.

According to the mechanism illustrated in FIG. 3, it is estimated from two problems described below that it is difficult to incorporate the solid particles 11 into each the composite particles 13 in a high concentration in miniemulsion polymerization.

A first problem is that it is difficult to increase the amount of the solid particles 11 charged in the mixed solution of the solid particles 11 and the monomer 10, illustrated in A of FIG. 3 to larger than a certain amount.

This is because viscosity of the mixed solution A increases with the increase in the amount of the solid particles 11 charged and therefore an emulsification step cannot be well performed and the emulsion B (monodispersed state) cannot be prepared. In Japanese Patent Application Laid-Open No. 2004-099844, an organic solvent in which the solid particles 11 are dispersed is mixed with a monomer, and thereby the concentration of the solid particles 11 in the mixed solution A is decreased while maintaining the amount of the solid particles 11 charged per monomer, so that a good emulsification is achieved. However, it is supposed that the second problem described below becomes noticeable in the method of Japanese Patent Application Laid-Open No. 2004-099844, and therefore, the method may not be suitable in some cases.

The second problem is that the solid particles 11 are separated from a dispersoid or the composite particles 13 by volume shrinkage caused in the dispersoid (the monomer 10 and the solid particles 11) in the case of conversion from the emulsion B (monodispersed state) into the composite particles 13 through a polymerization step (see C in FIG. 3).

Such a phenomenon is caused by the high degree of freedom of the solid particles 11 in a liquid component (monomer) of the dispersoid, and therefore can be prevented by increasing the concentration of the solid particles 11 in the mixed solution A. However, as the concentration of the solid particles 11 in the mixed solution A is increased, the first problem becomes noticeable, and therefore this method may not be suitable in some cases.

Further, the second problem can be prevented by changing a combination of an additive, the solid particles 11 and the monomer, and the like, but it does not lead to avoidance of the substantial problem.

The mechanism of composite particle formation in the present invention will be described using an example illustrated in FIG. 1. FIG. 1 illustrates the following steps: (1) a step of mixing a first liquid 21 containing a monomer and an organic solvent with solid particles 11 to obtain a mixed solution A; (2) a step of mixing the mixed solution A with water 12 for emulsification to prepare an O/W (Oil/Water) type monodispersed emulsion B (second liquid may be an aqueous solution in place of water); (3) a step of fractionating the first liquid 21 containing a monomer and an organic solvent from a dispersoid of the monodispersed emulsion B (FIG. 1, C illustrates a state of the emulsion after fractionation. Numeral 14 denotes a monomer distributed in water 14.); (4) a step of polymerizing a monomer using the monodispersed emulsion after fractionation as a template (the monomers 14 distributed in water combines with each other to form an oligomer 15 in an intermediate state of polymerization as illustrated by FIG. 1, D.); and (5) when the polymerization is further proceeded, a dispersion in which composite particles 31 are dispersed as illustrated in FIG. 1, E is obtained (a surfactant and a hydrophobe are omitted in FIG. 1).

In FIG. 1, the two problems in the miniemulsion polymerization explained with reference to FIG. 3 are solved by performing the fractionation. These solutions will be described below.

The reason why the first problem is solved is that a mixed solution 21 of a monomer and an organic solvent is used in preparing the mixed solution A, and therefore there ideally arises no limitation on the amount of the solid particles 11 charged per monomer unit. As exemplified in Japanese Patent Application Laid-Open No. 2004-099844, a mixed solution of a monomer and an organic solvent is also applicable to miniemulsion polymerization. However, the present inventor has confirmed by experiments that separation of the solid particles 11 is inversely promoted in a polymerization process when applied to miniemulsion polymerization performing no fractionation.

The reason why the second problem is solved is as follows. Since the liquid component in the dispersoid decreases in the monodispersed emulsion C after fractionation, an interaction between the solid particles 11 in the dispersoid increases. In addition, when the degree of fractionation is large, the solid particles 11 form aggregates in the dispersoid. When the degree of fractionation is much larger, the solid particles 11 in the dispersoid are not dispersed in a monomer 20, but the monomer 20 is in a wet state with the aggregates of the solid particles 11. This is because an organic solvent is preferentially volatilized and removed outside of the system by fractionation when a boiling point of the organic solvent is much lower than that of the monomer. As described above, the degree of freedom of the solid particles 11 is significantly lowered in the monodispersed emulsion after fractionation, illustrated by C. Separation of the solid particles 11 from the monodispersed emulsion after fractionation or the composite particles 31 is not caused even by volume shrinkage occurring in the case of conversion from the monodispersed emulsion after fractionation, illustrated by C, into a dispersion of the composite particles 31, illustrated by E, by way of the polymerization step.

Further, the production method of the present invention also includes a phenomenon different from miniemulsion polymerization.

That is, a part of the monomer extracted from the dispersoid is present as a monomer 14 distributed in water in the monodispersed emulsion after fractionation, illustrated by C. Therefore, it is considered that the emulsion goes through an intermediate state, illustrated by D, in the case of conversion from the monodispersed emulsion after fractionation, illustrated by C, into the dispersion liquid of the composite particles 31, illustrated by E. The monomer 14 distributed in water forms an oligomer 15 by polymerization reaction in the intermediate state D, and the oligomer cannot be maintained in a state dissolved in water and thereby is precipitated on the surface of the composite particles. This phenomenon shows one of advantages of the present invention that the surface design of composite particles can be performed by controlling the degree of fractionation.

As described above, the production method of a composite particle in the present invention has both an aspect of improvement in the conventional production method using miniemulsion polymerization and an aspect different from the miniemulsion polymerization.

Next, the composite particle in the present invention will be described.

The composite particle of the present invention is a composite particle comprising a polymer compound and solid particles.

The composite particles of the present invention are characterized in that the composite particles have a polydispersity index (Dw/Dn) calculated from a number average particle size (Dn) and a weight average particle size (Dw), of not less than 1.0 and not more than 1.3 and a ratio (Df/Dd) of an average hydrodynamic particle size (Df) in water and an average dry particle size (Dd), of not less than 1.0 and not more than 1.3. In addition, the content of the solid particles occupied in each of the composite particles is not less than 50 wt% and not more than 80 wt%, and not less than 80% of the solid particles are particles having a particle size of not more than 20 nm.

Since the composite particles of the present invention have a polydispersity index (Dw/Dn) of not more than 1.3, the characteristic variation as composite particles can be prevented.

Since the composite particles of the present invention have a ratio (Df/Dd) of an average hydrodynamic particle size (Df) in water and an average dry particle size (Dd) of not more than 1.3, the difference between a state of dispersing the composite particles in liquid and a state of drying the composite particles can be reduced. Thereby, the degree of swelling in water can be decreased, and durability and shape stability can be secured against environmental changes such as a pH change and a temperature change.

Moreover, since the content of the solid particles occupied in each of the composite particle of the present invention is not less than 50 wt%, the function possessed by the solid particles can be sufficiently exhibited. In addition, since the content of the solid particles occupied in each of the composite particles of the present invention is not more than 80 wt%, an adverse effect caused by exposure of the solid particles in a large amount to the surface of the composite particles can be prevented from occurring. A specific adverse effect referred herein is deterioration of surface physical properties including separation of the solid particles from the composite particles and dispersibility, and the like. In addition, since not less than 80% of the solid particles of the present invention are particles having a particle size of not more than 20 nm, the rate of exposure of the solid particles to the surface of the composite particles can be prevented from extremely increasing.

The number average particle size (Dn) and the weight average particle size (Dw) defined for the composite particles of the present invention can be measured as follows.

The number average particle size and the weight average particle size can be measured by a conventionally known particle size measurement technique, but can preferably be measured based on a dynamic light scattering method. As a specific measuring apparatus, a dynamic light scattering photometer, DLS-8000 manufactured by OTSUKA ELECTRONICS CO., LTD. or the like can be used.

Further, the average hydrodynamic particle size (Df) in water and the average dry particle size (Dd) in the present invention mean an average particle size in water and an average particle size in a dry state, respectively, of the composite particles of the present invention. More specifically, the average hydrodynamic particle size (Df) in water is a value of an average particle size measured based on a dynamic light scattering method by a dynamic light scattering photometer, DLS-8000 manufactured by OTSUKA ELECTRONICS CO., LTD. or the like. The average dry particle size (Dd) is a value of an average particle size in a dry state of particles observed by a transmission electron microscope (TEM).

Further, the content of the solid particles occupied in each of the composite particle can be measured or calculated by a conventionally known method, but can preferably be measured based on thermogravimetry.

Further, the composite particle of the present invention is preferably one having an average aspect ratio (major axis/minor axis) in a range of 1.0 to 1.5, more preferably in a range of 1.0 to 1.2, and showing increased sphericity. Such a true spherical composite particle is advantageous because it exhibits good flowability, for example, when used in a state dispersed in a liquid.

In the composite particles of the present invention, it is possible to control an average particle size depending on the intended purpose.

The average dry particle size of the composite particles of the present invention is preferably in a range of not less than 50 nm and not more than 1,000 nm, more preferably in a range of not less than 50 nm and not more than 500 nm, still more preferably in a range of not less than 50 nm and not more than 300 nm. A specific surface area effect of a composite particles can be obtained by adjusting the average particle size to not more than 1,000 nm, which becomes advantageous in the case of using the composite particle as a separation carrier of biological molecules and the like. This specific surface area effect is further increased by adjusting the average particle size to not more than 500 nm and the effect is extremely significant by adjusting the average particle size to not more than 300 nm. In addition, handleability of the composite particles can be improved by adjusting the average particle size to more than 50 nm.

The composite particles of the present invention can be produced using the method of producing composite particles of the present invention described above. Further, the control of the particle size of the composite particles can be performed by adjusting the amount of a dispersant added, the charge ratio of an organic solvent, a monomer and water, the equipment condition in an emulsification steps, and the like.

Further, the content of solid particles occupied in the composite particle can be controlled by adjusting the ratio of solid particles, an organic solvent and a monomer as charged.

As described above, the fine solid particles in each of the composite particles of the present invention can be constituted of an inorganic material particle, a metal material particle, an oxide material particle, a semiconductor material particle or the like. A magnetic material particle is preferably used as the fine solid particle because the function as a magnetic material can be sufficiently exhibited. As the magnetic material, a fine paramagnetic material particle is preferable.

The fine paramagnetic material particle can be arbitrarily used depending on the purpose when used as a magnetic material.

However, it is preferable to use a magnetic material in which the magnetization (remaining magnetization) when a strong magnetic field of 5,000 Oe is applied to a fine paramagnetic material particle and then the magnetic field is returned to a zero magnetic field, is not more than 1/3 of magnetization (saturated magnetization) when the magnetic field of 5,000 Oe is applied thereto.

Examples of the magnetic material include various ferrites such as tri-iron tetroxide (Fe₃O₄) and γ-heavy iron sesquioxide (γ-Fe₂O₃) ; and metals such as iron, manganese and cobalt, or alloys thereof.

Since there is a tendency that composite particles having stronger magnetic force are demanded for diagnostic use or the like, a magnetic material which is classified into a ferromagnetic material in a bulk state is preferably used among these magnetic materials. Moreover, ferrites is more preferable, and Fe₃O₄ (magnetite) is particularly preferable.

The particle size of fine paramagnetic material particles used is a particle size smaller than that of the objective composite particles. In this case, in order to prevent exposure of a magnetic material to the surface of the composite particles, a magnetic material having a particle size of preferably not more than 50 nm, more preferably not more than 30 nm, still more preferably not more than 20 nm is used.

On the other hand, as magnetic material particles are smaller, it is more difficult to stably disperse the magnetic material particles in a dispersoid of an emulsion, and therefore a magnetic material has a particle size of preferably not less than 3 nm, more preferably not less than 5 nm, still more preferably not less than 6 nm. In addition, when magnetite is used as fine paramagnetic material particles, the particle size is preferably not more than 30 nm, more preferably not more than 20 nm. This is because the effect of remaining magnetization can be decreased to thereby well maintain the dispersibility of composite particles by adjusting the particle size of magnetite to not more than 30 nm.

Hereinafter, the present invention will be specifically described by way of examples, but the present invention is not intended to be limited to these examples.

### (Examples)

### (Example 1) Preparation of Composite Particle 1

FeCl₃ and FeCl₂ were dissolved in water to make a dissolved solution. This dissolved solution was retained at room temperature and aqueous ammonia was added to the solution while vigorously stirring to make a suspension of magnetite.

Oleic acid was added to this suspension while stirring and the mixture was stirred at 70°C for 1 hour and 110°C for 1 hour to make a slurry. This slurry was washed with a large amount of water and then dried under reduced pressure to make a hydrophobic magnetite powder.

The obtained hydrophobic magnetite was evaluated by a transmission electron microscope (TEM), and as a result, the average particle size was 11 nm and the molecular weight distribution was 1.3.

Next, 2 g of styrene and 3 g of hydrophobic magnetite were weighed into 4 g of chloroform to prepare a chloroform mixed solution. On the other hand, 0.01 g of sodium dodecyl sulfate (SDS) was dissolved in 12 g of water to prepare an SDS aqueous solution. The chloroform mixed solution and the SDS aqueous solution were mixed to make a mixed solution, and this mixed solution was sheared for 30 minutes by a stirring homogenizer, and then for 4 minutes by an ultrasonic homogenizer to thereby prepare an emulsion. Next, this emulsion was subjected to treatment under reduced pressure by an evaporator to thereby preferentially fractionate the chloroform from a dispersoid.

After the emulsion obtained through the treatment described above was deoxidized by nitrogen bubbling, 0.01 g of a polymerization initiator (2,2'-Azobis(2-methylpropionamidine)dihydrochloride) was added to the resulting emulsion, and the styrene was polymerized at 70°C for 6 hours to obtain composite particles.

The obtained composite particles were evaluated by the DLS-8000 (manufactured by OTSUKA ELECTRONICS CO., LTD.), and it was confirmed that the number average particle size (Dn), the weight average particle size and the polydispersity index (Dw/Dn) were 152 nm, 187 nm and 1.23, respectively. Next, the average hydrodynamic particle size (Df) in water of the composite particles was evaluated using the DLS-8000 (manufactured by OTSUKA ELECTRONICS CO., LTD.) and the average dry particle size (Dd) in a dry state of the composite particles was evaluated using a transmission electron microscope. The average hydrodynamic particle size (Df), the average dry particle size (Dd) and the Df/Dd were 187 nm, 182 nm and 1.03, respectively.

Further, after the composite particle was embedded in an epoxy resin and sectioned with a microtome, the cross-section was observed by a transmission electron microscope, and it was confirmed that at least 80% of magnetite contained in this composite particle had particles having a particle size of not more than 20 nm. In addition, the composite particle was evaluated by TG-DTA (Simultaneous differential thermal and thermogravimetric measurement: Thermogravimetry/Differential Thermal Analysis) analysis, and it was confirmed that the content of the magnetic material in the composite particle was 63%.

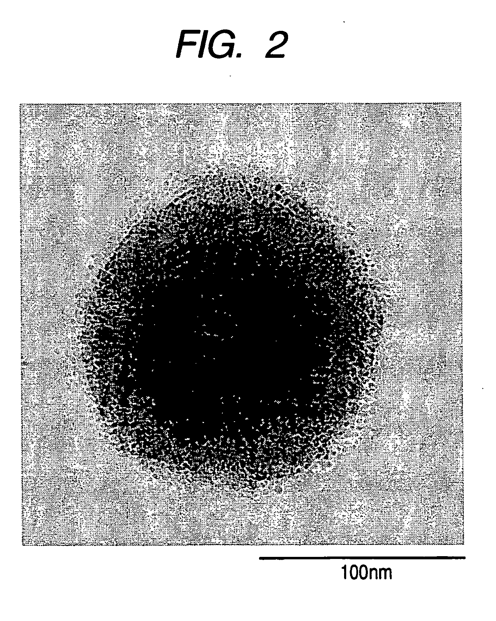

A transmission electron micrograph of the composite particle obtained in the present Example (before being sectioned described above) was illustrated in FIG. 2.

### (Example 2) Preparation of Composite Particle 2

FeCl₃ and FeCl₂ were dissolved in water to make a dissolved solution. Aqueous ammonia was added to this dissolved solution while vigorously stirring to make a suspension of magnetite.

Oleic acid was added to this suspension while stirring and the mixture was stirred at 70°C for 1 hour and 110°C for 1 hour to make a slurry. This slurry was washed with a large amount of water and then dried under reduced pressure to make a hydrophobic magnetite powder.

The obtained hydrophobic magnetite was dispersed in chloroform and the dispersion was evaluated by the DLS-8000 (manufactured by OTSUKA ELECTRONICS CO., LTD.), and as a result, the average particle size was 11 nm and the molecular weight distribution was 1.3.

3 g of methyl methacrylate and 3 g of hydrophobic magnetite were weighed into 3 g of chloroform to prepare a chloroform mixed solution. On the other hand, 0.01 g of sodium dodecyl sulfate (SDS) was dissolved in 12 g of water to prepare an SDS aqueous solution. The chloroform mixed solution and the SDS aqueous solution were mixed to make a mixed solution, and this mixed solution was sheared for 30 minutes by a stirring homogenizer, and then for 4 minutes by an ultrasonic homogenizer to thereby prepare an emulsion.

Next, this emulsion was subjected to treatment under reduced pressure by an evaporator to thereby preferentially fractionate chloroform from a dispersoid.

After the emulsion obtained through the treatment described above was deoxidized by nitrogen bubbling, 0.01 g of a polymerization initiator (2,2'-Azobis(2-methylpropionamidine)dihydrochloride) was added to the resulting emulsion, and methyl methacrylate was polymerized at 70°C for 6 hours to obtain composite particles. The obtained composite particles were evaluated by the DLS-8000 (manufactured by OTSUKA ELECTRONICS CO., LTD.), and it was confirmed that the number average particle size (Dn), the weight average particle size and the polydispersity index (Dw/Dn) were 140 nm, 168 nm and 1.20, respectively.

Next, the average hydrodynamic particle size (Df) in water and the average dry particle size (Dd) in a dry state of the composite particles were evaluated using the DLS-8000 (manufactured by OTSUKA ELECTRONICS CO., LTD.) and a transmission electron microscope in the same manner as in Example 1. The average hydrodynamic particle size (Df), the average dry particle size (Dd) and the Df/Dd were 168 nm, 165 nm and 1.02, respectively.

Further, after the composite particle was embedded in an epoxy resin and sectioned with a microtome in the same manner as in Example 1, the cross-section was observed by a transmission electron microscope, and it was confirmed that at least 80% of magnetite contained in this composite particle had particles having a particle size of not more than 20 nm.

In addition, the composite particle was evaluated by TG-DTA analysis in the same manner as in Example 1, and it was confirmed that the content of the magnetic material in the composite particle was 52%.

### (Example 3) Preparation of Composite Particle 3

FeCl₃ and FeCl₂ were dissolved in water to make a dissolved solution. This dissolved solution was retained at 40°C and aqueous ammonia was added to the solution while vigorously stirring to make a suspension of magnetite.

Oleic acid was added to this suspension while stirring and the mixture was stirred at 70°C for 1 hour and 110°C for 1 hour to make a slurry. This slurry was washed with a large amount of water and then dried under reduced pressure to make a hydrophobic magnetite powder.

The obtained hydrophobic magnetite was evaluated by a transmission electron microscope (TEM) in the same manner as in Example 1, and as a result, the average particle size was 6 nm and the molecular weight distribution was 1.2.

Next, 2 g of styrene, 1 g of glycidyl methacrylate and 3 g of hydrophobic magnetite were weighed into 3 g of chloroform to prepare a chloroform mixed solution. On the other hand, 0.01 g of sodium dodecyl sulfate (SDS) was dissolved in 12 g of water to prepare an SDS aqueous solution. The chloroform mixed solution and the SDS aqueous solution were mixed to make a mixed solution, and this mixed solution was sheared for 30 minutes by a stirring homogenizer, and then for 4 minutes by an ultrasonic homogenizer to thereby prepare an emulsion. Next, this emulsion was subjected to treatment under reduced pressure by an evaporator to thereby preferentially fractionate chloroform from a dispersoid.

After the emulsion obtained through the treatment described above was deoxidized by nitrogen bubbling, 0.01 g of potassium persulfate of a polymerization initiator was added to the resulting emulsion, and styrene and glycidyl methacrylate were polymerized at 70°C for 6 hours to obtain composite particles.

The obtained composite particles were evaluated by the DLS-8000 (manufactured by OTSUKA ELECTRONICS CO., LTD.) in the same manner as in Example 1, and it was confirmed that the number average particle size (Dn), the weight average particle size and the polydispersity index (Dw/Dn) were 181.25 nm, 232 nm and 1.28, respectively. Next, the average hydrodynamic particle size (Df) in water and the average dry particle size (Dd) in a dry state of the composite particles were evaluated using the DLS-8000 (manufactured by OTSUKA ELECTRONICS CO., LTD.) and a transmission electron microscope in the same manner as in Example 1. The average hydrodynamic particle size (Df), the average dry particle size (Dd) and the Df/Dd were 232 nm, 183 nm and 1.27, respectively.

Further, after the composite particle was embedded in an epoxy resin and sectioned with a microtome in the same manner as in Example 1, the cross-section was observed by a transmission electron microscope, and it was confirmed that at least 80% of magnetite contained in this composite particle had particles having a particle size of not more than 20 nm. In addition, the composite particle was evaluated by TG-DTA (Simultaneous differential thermal and thermogravimetric measurement: Thermogravimetry/Differential Thermal Analysis) analysis in the same manner as in Example 1, and it was confirmed that the content of the magnetic material in the composite particle was 54%.

### (Comparative Example 1)

Composite particles were produced in the same procedure and conditions as in Example 1 except that chloroform was not used, and as a result, the composite particles aggregated and uniform particles could not be obtained.

### (Comparative Example 2)

Composite particles were produced in the same procedure and conditions as in Example 1 except that the fractionation step was not performed.

The obtained composite particles were evaluated by the DLS-8000 (manufactured by OTSUKA ELECTRONICS CO., LTD.) in the same manner as in Example 1, and it was confirmed that the number average particle size (Dn), the weight average particle size (Dw) and the polydispersity index (Dw/Dn) were 151 nm, 181 nm and 1.20, respectively. Next, the average hydrodynamic particle size (Df) in water and the average dry particle size (Dd) in a dry state of the composite particles were determined using the DLS-8000 (manufactured by OTSUKA ELECTRONICS CO., LTD.) and a transmission electron microscope. The average hydrodynamic particle size (Df), the average dry particle size (Dd) and the Df/Dd were 181 nm, 179 nm and 1.01, respectively.

Further, after the composite particle was embedded in an epoxy resin and sectioned with a microtome, the cross-section was observed by a transmission electron microscope, and it was confirmed that at least 80% of magnetite contained in this composite particle had particles having a particle size of not more than 20 nm. In addition, the composite particle was evaluated by TG-DTA (Simultaneous differential thermal and thermogravimetric measurement: Thermogravimetry/Differential Thermal Analysis) analysis, and it was confirmed that the content of the magnetic material in the composite particle was 32%. In the present Comparative Example, the content of the magnetic material in the composite particle did not reach 50%, and therefore the function as a magnetic material cannot be always sufficiently exhibited.

### (Comparative Example 3)

After 3 g of N-isopropylacrylamide (NIPAM) and 0.5 g of methacrylic acid (MAc) were dissolved in toluene and the resulting solution was subjected to nitrogen bubbling for 30 minutes, 0.01 g of azobis-isobutylacrylamide as an initiator was added to the solution and the polymerization reaction was performed at 60°C for 3 hours. The operation in which the obtained solution of NIPAM-Mac copolymer dissolved in toluene was added to a large amount of diethyl ether for precipitation was repeated 3 times to thereby purify the NIPAM-MAc copolymer.

After this NIPAM-MAc copolymer and FeCl₃ were dissolved in water and the resulting solution was subjected to nitrogen bubbling for 1 hour, ammonia was added to the solution to thereby form composite particles. A dispersion of the composite particles in water was purified by decantation using a magnet, centrifugation and filtering using a hydrophilic filter with a pore size of 1 µm.

The obtained composite particles were evaluated by the DLS-8000 (manufactured by OTSUKA ELECTRONICS CO., LTD.) in the same manner as in Example 1, and it was confirmed that the number average particle size (Dn), the weight average particle size (Dw) and the polydispersity index (Dw/Dn) were 180 nm, 232 nm and 1.29, respectively. Next, the average hydrodynamic particle size (Df) in water and the average dry particle size (Dd) in a dry state of the composite particles were evaluated using the DLS-8000 (manufactured by OTSUKA ELECTRONICS CO., LTD.) and a transmission electron microscope (TEM) in the same manner as in Example 1. The average hydrodynamic particle size (Df), the average dry particle size (Dd) and the Df/Dd were 232 nm, 164 nm and 1.42, respectively. However, the composite particle observed by a transmission electron microscope was amorphous, and therefore an average of the maximum major axis and the minimum minor axis was calculated as a particle size of the composite particle.

Further, after the composite particle was embedded in an epoxy resin and sectioned with a microtome in the same manner as in Example 1, the cross-section was observed by a transmission electron microscope, but good observation condition could not be obtained. In addition, the composite particle was evaluated by TG-DTA analysis in the same manner as in Example 1, and it was confirmed that the content of the magnetic material in the composite particle was 69%.

The composite particle in the present Comparative Example had Df/Dd of more than 1.3, and thus stability against environmental changes was insufficient.

### INDUSTRIAL APPLICABILITY

According to preferred examples of the present invention described above, composite particles each comprising a polymer compound and solid particles which is applicable to a wide range of industrial fields including electronic materials, optical materials, and medical materials can be provided. In case of magnetic particles each comprising a polymer compound and magnetic materials, magnetic particles having a high content of the magnetic material and excellent magnetization uniformity, size uniformity and dispersibility can be provided.

While the present invention has been described with reference to the exemplary examples, it is to be understood that the invention is not limited to the disclosed exemplary examples. The scope of the following claims is to be accorded the broadcast interpretation so as to encompass all such modifications and equivalent structures and functions.

This application claims the benefit of Japanese Patent Application No. 2007-170232, filed June 28, 2007, which is hereby incorporated by reference herein in its entirety.

## Claims

1. A method of producing composite particles each comprising a polymer compound and solid particles, **characterized by** comprising the steps of:
(1) mixing a first liquid containing a monomer and an organic solvent with solid particles to obtain a mixed solution;
(2) mixing the mixed solution with a second liquid to form an emulsion;
(3) fractionating the first liquid from a dispersoid of the emulsion; and
(4) polymerizing the monomer remaining in the dispersoid after the fractionation.

2. The method of producing composite particles according to claim 1, **characterized in that** the fractionation includes an operation under reduced pressure.

3. The method of producing composite particles according to claim 1, **characterized in that** the organic solvent is a volatile organic solvent.

4. The method of producing composite particles according to claim 3, **characterized in that** the volatile organic solvent has a boiling point lower than that of the monomer.

5. The method of producing composite particles according to claim 1, **characterized in that** the second liquid is water or an aqueous solution.

6. The method of producing composite particles according to claim 1, **characterized in that** the solid particles are particles of a magnetic material.

7. The method of producing composite particles according to claim 1, **characterized in that** the solid particles are particles of magnetite.

8. Composite particles each comprising a polymer compound and solid particles, **characterized in that** the composite particles have a polydispersity index (Dw/Dn) calculated from a number average particle size (Dn) and a weight average particle size (Dw), of not more than 1.3 and a ratio (Df/Dd) of an average hydrodynamic particle size (Df) in water and an average dry particle size (Dd), of not more than 1.3; and the content of the solid particles occupied in each of the composite particles is not less than 50 wt% and not more than 80 wt%, and not less than 80% of the solid particles are particles having a particle size of not more than 20 nm.

9. The composite particles according to claim 8, **characterized in that** the composite particles have an average dry particle size in a range of 50 nm to 300 nm.

10. The composite particles according to claim 8, **characterized in that** the solid particles are particles of a magnetic material.

11. The composite particles according to claim 10, **characterized in that** the solid particles are particles of magnetite.

## Patentansprüche

1. Verfahren zur Herstellung von Verbundpartikeln, je umfassend eine Polymerverbindung und Festkörperpartikel,
**gekennzeichnet durch** als die Schritte umfassend:
(1) Mischen einer ersten Flüssigkeit, die ein Monomer und ein organisches Lösungsmittel enthält, mit Festkörperpartikeln zwecks Erhalt einer Lösungsmixtur;
(2) Mischen der Lösungsmixtur mit einer zweiten Flüssigkeit zwecks Ausbildung einer Emulsion;
(3) Fraktionieren der ersten Flüssigkeit aus einem Dispersoid der Emulsion; und
(4) Polymerisieren des nach der Fraktionierung in dem Dispersoid verbliebenen Monomers.

2. Verfahren nach Anspruch 1, **dadurch gekennzeichnet, dass** die Fraktionierung einen Vorgang unter reduziertem Druck beinhaltet.

3. Verfahren nach Anspruch 1, **dadurch gekennzeichnet, dass** das organische Lösungsmittel vorliegt als flüchtiges organisches Lösungsmittel.

4. Verfahren nach Anspruch 3, **dadurch gekennzeichnet, dass** das flüchtige organische Lösungsmittel einen Siedepunkt niedriger als der des Monomers hat.

5. Verfahren nach Anspruch 1, **dadurch gekennzeichnet, dass** die zweite Flüssigkeit vorliegt als Wasser oder als eine wässrige Lösung.

6. Verfahren nach Anspruch 1, **dadurch gekennzeichnet, dass** die Festkörperpartikel vorliegen als Partikel eines magnetischen Materials.

7. Verfahren nach Anspruch 1, **dadurch gekennzeichnet, dass** die Festkörperpartikel vorliegen als Magnetitpartikel.

8. Verbundpartikel, je umfassend eine Polymerverbindung und Festkörperpartikel,
**dadurch gekennzeichnet, dass**
die Verbundpartikel einen Polydispersizitätsindex (Dw/Dn), und zwar berechnet aus einer zahlenmäßigen durchschnittlichen Partikelgröße (Dn) und einer gewichtsmäßigen durchschnittlichen Partikelgröße (Dw), von nicht mehr als 1,3 sowie ein Verhältnis (Df/Dd) einer durchschnittlichen hydrodynamischen Partikelgröße (Df) in Wasser und einer durchschnittlichen Trockenpartikelgröße (Dd) von nicht mehr als 1,3 haben; und wobei der Gehalt an Festkörperpartikeln, welcher in einem jeden der Verbundpartikel vorliegt, nicht kleiner ist als 50 Gew-% und nicht mehr als 80 Gew-%, und wobei nicht weniger als 80 % der Festkörperpartikel solche sind, welche eine Partikelgröße von nicht mehr als 20 nm haben.

9. Verbundpartikel nach Anspruch 8, **dadurch gekennzeichnet, dass** sie eine durchschnittliche Trockenpartikelgröße in einem Bereich von 50 nm bis 300 nm haben.

10. Verbundpartikel nach Anspruch 8, **dadurch gekennzeichnet, dass** die Festkörperpartikel vorliegen als Partikel eines magnetischen Materials.

11. Verbundpartikel nach Anspruch 10, **dadurch gekennzeichnet, dass** die Festkörperpartikel vorliegen als Magnetitpartikel.

## Revendications

1. Procédé pour la production de particules composites comprenant chacune un composé polymère et des particules solides, **caractérisé en ce qu'**il comprend les étapes consistant à :
(1) mélanger un premier liquide contenant un monomère et un solvant organique à des particules solides pour obtenir une solution mixte ;
(2) mélanger la solution mixte avec un second liquide pour former une émulsion ;
(3) fractionner le premier liquide à partir d'un dispersoïde de l'émulsion ; et
(4) polymériser le monomère restant dans le dispersoïde après fractionnement.

2. Procédé pour la production de particules composites suivant la revendication 1, **caractérisé en ce que** le fractionnement comprend une opération sous pression réduite.

3. Procédé pour la production de particules composites suivant la revendication 1, **caractérisé en ce que** le solvant organique est un solvant organique volatil.

4. Procédé pour la production de particules composites suivant la revendication 3, **caractérisé en ce que** le solvant organique volatil a un point d'ébullition inférieur à celui du monomère.

5. Procédé pour la production de particules composites suivant la revendication 1, **caractérisé en ce que** le second liquide est l'eau ou une solution aqueuse.

6. Procédé pour la production de particules composites suivant la revendication 1, **caractérisé en ce que** les particules solides sont des particules d'une matière magnétique.

7. Procédé pour la production de particules composites suivant la revendication 1, **caractérisé en ce que** les particules solides sont des particules de magnétite.

8. Particules composites comprenant chacune un composé polymère et des particules solides, lesdites particules composites étant **caractérisées en ce qu'**elles ont un indice de polydispersité (Dw/Dn), calculé d'après une moyenne en nombre du diamètre de particule (Dn) et une moyenne en poids du diamètre de particule (Dw), non supérieur à 1,3 et un rapport (Df/Dd) d'un diamètre de particule hydrodynamique moyen (Df) dans l'eau à un diamètre de particule sèche moyen (Dd) non supérieur à 1,3 ; et la quantité des particules solides présentes dans chacune des particules composites est non inférieure à 50 % en poids et non supérieure à 80 % en poids, et pas moins de 80 % des particules solides consistent en particules ayant un diamètre de particule non supérieur à 20 nm.

9. Particules composites suivant la revendication 8, lesdites particules composites étant **caractérisées en ce qu'**elles ont un diamètre de particule sèche moyen dans un intervalle de 50 nm à 300 nm.

10. Particules composites suivant la revendication 8, **caractérisées en ce que** les particules solides sont des particules d'une matière magnétique.

11. Particules composites suivant la revendication 10, **caractérisées en ce que** les particules solides sont des particules de magnétite.
